# EUROPÄISCHE PATENTSCHRIFT

(11) **EP 0 634 111 B1**
(45) Veröffentlichungstag und Bekanntmachung des Hinweises auf die Patenterteilung: **12.03.1997**
(21) Anmeldenummer: 93111111.6
(22) Anmeldetag: 12.07.1993
(51) Int. Cl.: A23P 1/08, A23L 3/375, F25D 3/12, A23L 1/31, A23L 1/325

(54) **Verfahren und Vorrichtung zur Herstellung eines Mehrschichtlebensmittels**
Process and apparatus for the production of a multilayered food product
Procédé et appareillage pour la production d'un aliment en plusieurs couches

(43) Veröffentlichungstag der Anmeldung: 18.01.1995
(73) Patentinhaber: SOCIETE DES PRODUITS NESTLE S.A., 1800 Vevey (CH)
(72) Erfinder: Beyer, Hans-Joachim, D-84577 Tüssling (DE); Jung, Hans Jürgen, D-84445 Mühldorf Am Inn (DE); Wild, Manfred, D-86405 Meitingen (DE); Kuypers, Théo Walter, CH-3078 Richigen (CH)
(74) Vertreter: Thomas, Alain

(56) Entgegenhaltungen:
- EP-A- 0 478 316
- FR-A- 2 049 463
- FR-A- 2 211 633
- GB-A- 1 177 354
- GB-A- 2 252 228

## Beschreibung

Die Erfindung betrifft ein Verfahren zur Herstellung eines Mehrschichtlebensmittels mit zwei übereinander liegenden Komponenten, wobei eine Komponente mit der größeren Dichte über eine Schicht mit niederer Dichte angeordnet ist und die Vorrichtung zur Durchführung des Verfahrens.

Mehrschichtlebensmittel, bei denen die Komponente mit der größeren Dichte oberhalb liegt, sind schon bekannt. Sie sind aber für kurze Zeit haltbar und können nur handwerklich hergestellt werden, wobei die untere Schicht abgefüllt, im Kühlschrank zum Aussteifen gelagert und erst dann die obere Schicht darauf dosiert wird. Das handwerkliche Herstellungsverfahren braucht eine zu lange Zeit um auf einer kontinuierlichen arbeitenden industriellen Linie durchgeführt zu werden.

Das GB-Patent Nr. 2252228 betrifft schon ein Mehrschichtlebensmittel mit zwei übereinander liegenden Komponenten, wobei eine Komponente mit der grösseren Dichte über einer Schicht mit niederer Dichte angeordnet ist. Es ist aber nichts gesagt, was das Herstellungsverfahren betrifft.

Ein Verfahren zur Herstellung von zwei übereinander liegenden fliessfähigen Schichten ist schon im EP-Patent Nr. 478316 bekannt. Dieses Patent betrifft ein Verfahren zur Aufbringung von CO₂-Schnee auf eine flüssige Oberfläche. Der Nachteil dieses Verfahrens ist der daß man nicht eine vollständige und gleichmäßige CO₂-Schnee-Oberflächenabdeckung gewährleisten kann, was zu Temperaturdifferenzen auf der Oberfläche führt. Und zweitens, muß man warten bis der CO₂-Schnee ganz wegsublimiert ist, was länger als zwei Minuten dauert und deswegen zur unakzeptablen Verlängerung der Produktionslinie führt.

Der Erfindung liegt die Aufgabe zugrunde, ein Verfahren und eine Vorrichtung zur Aufbringung von CO₂-Schnee auf die Oberfläche eines Lebensmittels zu entwickeln, die eine gleichmässige CO₂-Verteilung erlaubt und zu einer kompakten Produktionslinie führt. Das Verfahren erlaubt ein Mehrschichtlebensmittel in kontinuierlicher Weise derart industriell herzustellen, daß eine Haltbarkeit von fünf Wochen bei einer Temperatur unterhalb 10°C erzielbar ist.

Die Erfindung betrifft ein Verfahren zur Herstellung eines Mehrschichtlebensmittels, wobei ein Behälter zunächst mit der ersten Komponente und dann mit der zweiten Komponente abgefüllt wird, und vor der Dosierung der zweiten Komponente die Oberfläche der ersten Komponente vollständig und gleichmässig mit Hilfe von CO₂-Schnee gefrostet wird, wobei zwischen der Abfüllung der beiden Komponenten max. 30 Sek. vergehen und der Rest CO₂-Schnee abgesaugt wird. Die Frostung der Oberfläche erlaubt die Aufbringung von Komponenten höherer Dichte und niedrigerer Viskosität, ohne daß dabei Vermischungen oder Absinkerscheinungen auftreten.

Erfindungsgemäss ist es möglich ein in einer Verpackung enthaltenes Mehrschichtlebensmittel herzustellen, das gekühlt haltbar und industriell herstellbar ist und in dem der Dichteunterschied zwischen der beiden Komponenten mindestens 0,2 ist.

Unter Verpackung versteht man jegliche Behälter, die für Lebensmittel geeignet sind. Besonders bevorzugt sind Kunststoffbecher, z.B. aus Polystyrol, Polypropylen oder Glas.

Unter Mehrschichtlebensmittel versteht man ein Produkt, das aus Schichten unterschiedlicher Dichte aufgebaut ist und eventuell weitere Komponenten enthält, z.B. Kuchen oder Fruchtzubereitungen.

Unter Lebensmittel versteht man Dessert, Fleischmousse, Gelee oder fleisch-, fisch- oder gemüsehaltige Produkte.

Im Mehrschichtlebensmittel liegt vorzugsweise der Dichteunterschied zwischen 0,2 und 0,8. Zum Beispiel hat die untere Schicht eine Dichte von 0,4 bis 0,8 und die obere Schicht eine Dichte zwischen 1 und 1,2. Die Dichte ist in der ganzen Beschreibung in kg/dm³ angegeben.

Die untere Schicht kann Mousse, wie geschäumtes Milchdessert oder Yoghurt sein und die obere Schicht Fruchtgelee oder Schokolade. Diese letztgenannte Schicht hat eine Dicke bevorzugt zwischen 1 und 8 mm oder auch mehr. Vor der Abfüllung werden diese beiden Komponenten pasteurisiert oder UHT behandelt, so daß das fertige Produkt mehr als 5 Wochen haltbar ist. Es ist auch möglich, daß unter dem Mousse noch weitere Komponenten eingebettet sind, z.B. Kuchenscheiben, Fruchtzubereitungen oder weitere Schichten.

Um das Kondensieren von Wasser zu vermeiden, ist es notwendig zwischen der Abfüllung der beiden Komponenten unter kontrollierten Luftbedingungen zu arbeiten. Unter kontrollierten Luftbedingungen versteht man, das die Luft trocken und auf eine bestimmte Temperatur eingestellt sein muß.

Das gesamte Frostverfahren beinhaltet somit Aufbringung des CO₂-Schnees, dessen Einwirkung und Absaugung des über schüssigen CO₂-Schnees. Es ist örtlich und zeitlich in den Abfüllvorgang der einzelnen Produktkomponenten integriert. Erfindungsgemäss wird gezielt die Produktoberfläche bis zu einer geringen Eindringtiefe gefrostet und damit verfestigt und nicht wie sonst üblich das gesamte Produkt. Dadurch sinkt zum einen der maschinelle Aufwand und zum anderen der Bedarf an CO₂ Schnee. Der CO₂-Schnee wird unmittelbar auf die Produktoberfläche aufgebracht. Die Einwirkzeit des Kältemittels beträgt zwischen 5 und 20 Sek., wobei CO₂ Schnee bei ungefähr -75°C auf der Oberfläche deponiert wird.

Die Dosierung geschieht einmalig in einer Menge von ca 0,1-0,2 g/cm^{2.} Da die vollständige Sublimation während einer Einwirkzeit von 20 Sek. nicht zu erreichen ist, ist eine Absaugung vorzusehen.

Wenn die Oberfläche der ersten Komponente gefrostet ist, kann man die zweite Komponente mit höherer Dichte darauf dosieren. Die einzige Bedingung ist, dass die Oberfläche der ersten Komponente gleichmässig und ausreichend gefrostet ist, sowie keinen Restschnee aufweist.

Wenn die zweite Komponente aufdosiert ist, kommt die Temperatur des ersten Komponente allmählich wieder zurück zur Abfülltemperatur.

Aufgrund einer bereits eingetretenen Verfestigung der Struktur der ersten (leichteren) Komponente besteht dann keine Gefahr mehr des Absinkens der zweiten (schwereren) Komponente.

Die Dosierung des CO₂-Schnee, kann getaktet oder kontinuierlich geschehen.

Die Erfindung betrifft weiter die Vorrichtung zur Durchführung des obenerwähnten Verfahrens, bestehend aus einer Station zur Abfüllung der ersten Komponente, einer Station zur Abfüllung der zweiten Komponente, und zwischen den beiden Abfüllungsstationen eine Dosiervorrichtung zur Dosierung von CO₂-Schnee wobei die Dosiervorrichtung aus mindestens einer Düse am oberen Ende eines unten offenen Hohlkörper besteht und die zusätzlich vor Dosierung der zweiten Komponente eine CO₂-Schnee Absaugvorrichtung aufweist. Die gesamte Vorrichtung ist in eine Abfüllmaschine integriert.

Die ganze Vorrichtung läuft vorzugsweise im Takt, obwohl eine kontinuierliche Bewegung nicht ausgeschlossen ist.

Die Stationen zur Abfüllung der beiden Komponenten sind Bestandteil einer herkömmlichen Abfüllmaschine, die eine aseptiche oder ultrahygienische Abfüllung erlauben.

Um eine regelmässige Verteilung des CO₂-Schnees zu erzielen, ist die Düse in einem Abstand zwischen 20 bis 80 cm von der Oberfläche der ersten Komponente angebracht. Der Hohlkörper in dem die Düse angebracht ist, hat normalerweise eine rotationssymetrische Form.

Die Absaugvorrichtung besteht aus einem zylindrischen Hohlkörper, der ungefähr dem Durchmesser des Produktbehälters entspricht. Am unteren Ende des Körpers, in der Nähe der Oberfläche der ersten Komponente, sind mindestens zwei Düsen zur Einbringung von Druckluft vorgesehen. Vorzugsweise sind vier Düsen angebracht, die regelmässig verteilt sind und einen zirkulierenden Luftstrahl zur Schneeauflockerung erzielen. Der aufgelockerte Schnee wird durch den zylindrischen Hohlkörper abgesaugt.

Um die Produktivität zu erhöhen, arbeitet man mit einer mehrbahnigen Vorrichtung.

Die ganze Vorrichtung ist im Bereich der Dosiervorrichtung für CO₂-Schnee mit einem Klimatunnel versehen. In diesem wird zur Vermeidung von Feuchtigkeitskondensation trockene Luft unter Aufrechterhaltung der aerostatischen Gesamtbedingungen eingeblasen.

Die Beschreibung wird jetzt anhand der beiliegenden Figuren näher erläutert, die eine schematische Darstellung der Vorrichtung zeigt.

Die erfindungsgemässe Vorrichtung ist in eine ultrahygienische Abfüllmaschine integriert. Sie besteht aus einem Dosierer (1) für die erste Komponente, einem Dosierer (8) für die zweite Komponente und einen zwischen diesen beiden Dosierern angebrachten Klimmatunnel (13), der die Aufrechterhaltung einer Mindesttemperatur und der erforderlichen hygienischen Bedingungen gewährleistet. Oberhalb des Klimmatunnels ist eine Kältemitteldosiervorrichtung (4) und eine Schneeabsaugungvorrichtung (5) vorgesehen.

Die Vorrichtung funktionniert wie folgt.

Die Luftbedingung im Klimmatunnel (13) wird durch Einbringen konditionierter Luft (10) mittels geeigneter Verteilerdüsen an verschiedenen Positionen (12) kontrolliert. Die eingebrachte Luft wird zuvor durch einen Sterilfilter (11) von mikrobiellen Verunreinigungen befreit.

Die Behälter (14) werden mit Hilfe eines taktweise arbeitenden Förderbandes (9) der Dosierstation (1) für die erste Komponente (15) zugeführt. Zuvor kann gegebenenfalls bereits die Dosierung weiterer Bestandteile des Mehrschichtdesserts wie Kuchen oder Fruchtzubereitungen erfolgt sein. Nachdem eine definierte Menge der ersten Komponente dosiert wurde, gelangt der Behälter durch taktweises Weiterbewegen des Förderbandes in den Klimmatunnel (13). Unter der Kältemitteldosiervorrichtung (4) wird eine Menge von 0,1 bis 0,2 g/cm² CO₂-Schnee (16) auf die Oberfläche der ersten Komponente gegeben. Der CO₂-Schnee wird durch Entspannung von flüssigen CO₂ in einer oder mehreren Düsen, die sich in einem Düsenkopf (3) am oberen Ende eines unten offenen Hohlkörpers befinden, erzeugt. Mit Hilfe eines Magnetventils (2) kann die Schneedosierung kontinuierlich oder taktweise erfolgen.

Während der Einwirkzeit des CO₂-Schnees verfestigt sich die Oberfläche der 1. Komponente gleichmässig und bis zu einer gewünschten Tiefe. Die Einwirkzeit ist definiert durch die Taktgeschwindigkeit der Abfüllmaschine und dem Abstand zwischen Schneedosierung und Schneeabsaugung. An der Schneeabsaugvorrichtung (5) wird durch taktweises tangentiales Einblasen von sterilgefilterter Druckluft (6) eine Wirbelströmung erzeugt, die den agglomerierten CO₂-Schnee auflockert. Dieser wird durch ein Sauggebläse (7) restlos von der Oberfläche der 1. Komponente entfernt. Durch weiteres taktweise Fortbewegen des Förderbandes gelangt der Behälter mit der gefrosten Oberfläche der ersten Komponente zum Dosierer (8) für die zweite Komponente. Dort wird taktweise die zweite Komponente auf die erste Komponente aufdosiert.

Anschliessend kann sich der Vorgang der Oberflächenfrostung an einer zweiten Frostvorrichtung wiederholen um eine weitere Komponente aufzubringen, oder der Behälter gelangt direkt zur Siegeleinrichtung wo er verschlossen wird.

Die Erfindung wird anhand des folgenden Beispiels erläutert.

### Beispiel

Man mischt bei 70°C 42% Magermilch mit 20% Sahne, 5% Zucker, 6,7% Kondensat, 2% Magermilchpulver und 20% Waldfruchtzubereitung mit Gelatine. Diese Mischung wird dann bei 140°C UHT behandelt, gekühlt und danach aufgeschäumt um eine Volumenzunahme von 90% zu erreichen. Das Mousse wird dann durch eine Düse in den Behälter dosiert.

Der Becher wird unter die Kältemitteldosiervorrichtung geführt, wobei man 7 g CO₂ Schnee auf die Oberfläche dosiert.

Nach einer Einwirkzeit von 15 Sek. saugt man den Rest von CO₂ ab. Die ganze Oberfläche ist dadurch auf eine Temperatur von -50°C gekühlt worden und damit verfestigt. Danach wird eine Heidelbeerschicht aufgebracht. Sie besteht aus 30% Heidelbeeren, 42% Wasser, 25% Zucker und 1,2% Gelatine und wird vor Aufbringung noch pasteurisiert oder UHT behandelt. Das Mousse hat eine Dichte von 0,5 und ein pH von ca. 4,6 und die Fruchtschicht eine Dichte von 1,2 ein pH von 3,7 und eine Dicke von 5mm.

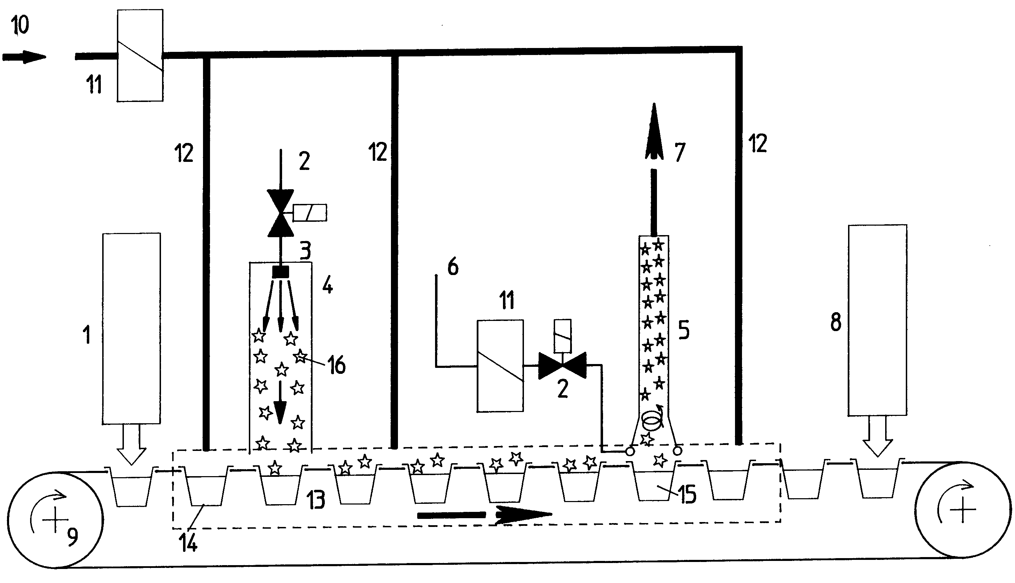

## Patentansprüche

1. Verfahren zur kontinuierlichen Herstellung eines Mehrschichtlebensmittels mit zwei übereinander liegenden Komponenten, wobei die Komponente mit der grösseren Dichte über einer Schicht mit niederer Dichte angeordnet ist, wobei ein Behälter (14) zuerst mit der ersten Komponente (1), und dann mit der zweiten Komponente (8) gefüllt wird und vor Dosierung der zweiten Komponente die Oberfläche der ersten Komponente mit Hilfe von CO₂-Schnee gefrostet wird, dadurch gekennzeichnet, daß zwischen der Abfüllung der beiden Komponenten max. 30 Sek. vergehen und daß der Rest CO₂-Schnee abgesaugt wird.

2. Verfahren gemäß Anspruch 1, dadurch gekennzeichnet, daß die Einwirkzeit des CO₂-Schnee zwischen 5 und 20 Sekunden beträgt.

3. Verfahren gemäß Anspruch 1 oder 2, dadurch gekennzeichnet, daß die Dosierung von CO₂-Schnee einmalig in eine Menge von 0,1-0,2 g/cm² geschieht.

4. Verfahren gemäß einem der Ansprüche 1 bis 3, dadurch gekennzeichnet, daß die Dosierung von CO₂-Schnee getaktet oder kontinuierlich geschieht.

5. Verfahren gemäß Anspruch 1 dadurch gekennzeichnet, daß der Dichteunterschied der beiden Komponenten zwischen 0,2 und 0,8 liegt.

6. Verfahren gemäß Anspruch 1 oder 5, dadurch gekennzeichnet, daß die unterhalb liegende Komponente Mousse oder Yoghurt und die oberhalb liegende Komponente Gelee oder Schokolade ist.

7. Vorrichtung zur Durchführung des Verfahrens gemäss einem der Ansprüche 1 bis 6, bestehend aus einer Station (1) zur Abfüllung der ersten Komponente, einer Station (8) zur Abfüllung der zweiten Komponente und einer Dosiervorrichtung (4) zwischen den beiden Abfüllungstationen zur Dosierung von CO₂-Schnee, dadurch gekennzeichnet, daß die Dosiervorrichtung (4) aus mindestens einer Düse (3) am oberen Ende eines unten offenen Hohlkörpers besteht und daß sie zusätzlich vor der Dosierung der zweiten Komponente eine CO₂-Schnee-Absaugvorrichtung (5) aufweist.

8. Vorrichtung gemäß Anspruch 7, dadurch gekennzeichnet daß sie taktweise läuft.

9. Vorrichtung gemäß Anspruch 7 oder 8, dadurch gekennzeichnet, daß die Düse (3) in einem Abstand zwischen 20 bis 80 cm von der Oberfläche der ersten Komponente (15) liegt.

10. Vorrichtung gemäß einem der Ansprüche 7 bis 9, dadurch gekennzeichnet, daß die Absaugvorrichtung (5) aus einem zylindrischen Hohlkörper besteht, der in der Nähe der Oberfläche der ersten Komponente mindestens zwei Düsen zur Einbringung von Druckluft (6) aufweist.

## Claims

1. Process for the continuous production of a multi-layer food product having two constituents located one above the other, wherein the constituent having the greater density is disposed above a layer having a low density, wherein a container (14) is first filled with the first constituent (1) and then with the second constituent (8) and, before the metering-out of the second constituent, the surface of the first constituent is frosted with the aid of CO₂ snow, characterised in that a maximum of 30 seconds elapses between the dispensing of the two constituents and that the residue of CO₂ snow is removed by suction.

2. Process according to claim 1, characterised in that the action time of the CO₂ snow is between 5 and 20 seconds.

3. Process according to claim 1 or 2, characterised in that the metering-out of CO₂ snow occurs once only in a quantity of 0.1-0.2 g/cm².

4. Process according to one of claims 1 to 3, characterised in that the metering-out of CO₂ snow occurs cyclically or continuously.

5. Process according to claim 1, characterised in that the difference in the density of the two constituents lies between 0.2 and 0.8.

6. Process according to claim 1 or 5, characterised in that the constituent lying underneath is mousse or yoghourt and the constituent lying on top is jelly or chocolate.

7. Device for carrying out the process according to one of claims 1 to 6, consisting of a station (1) for dispensing the first constituent, a station (8) for dispensing the second constituent and a metering device (4) between the two dispensing stations for metering-out CO₂ snow, characterised in that the metering device (4) consists of at least one nozzle (3) at the upper end of an open-bottomed hollow body and that it additionally has, before the metering-out of the second constituent, a device for removing the CO₂ snow by suction.

8. Device according to claim 7, characterised in that it operates cyclically.

9. Device according to claim 7 or 8, characterised in that the nozzle (3) lies at a distance of between 20 and 80 cm from the surface of the first constituent (15).

10. Device according to one of claims 7 to 9, characterised in that the suction-type removal device (5) consists of a cylindrical hollow body which has, in the vicinity of the surface of the first constituent, at least two nozzles for the introduction of compressed air (6).

## Revendications

1. Procédé de production continue d'un aliment en plusieurs couches à deux composants superposés, dont le composant le plus dense est disposé au-dessus d'une couche moins dense, dans lequel un récipient (14) est tout d'abord chargé du premier composant (1) puis du second composant (8) et, avant le dosage du second composant, la surface du premier composant est congelée à l'aide de neige carbonique, caractérisé en ce que 30 secondes au maximum s'écoulent entre les chargements des deux composants et en ce que le reste de neige carbonique est enlevé par succion.

2. Procédé suivant la revendication 1, caractérisé en ce que le temps d'action de la neige carbonique s'élève entre 5 et 20 secondes.

3. Procédé suivant la revendication 1 ou 2, caractérisé en ce que le dosage de neige carbonique est effectué en une seule fois en une quantité de 0,1 à 0,2 g/cm².

4. Procédé suivant l'une des revendications 1 à 3, caractérisé en ce que le dosage de la neige carbonique est effectué en cadence ou en continu.

5. Procédé suivant la revendication 1, caractérisé en ce que la différence de masses volumiques des deux composants se situe entre 0,2 et 0,8.

6. Procédé suivant la revendication 1 ou 5, caractérisé en ce que le composant qui se trouve en-dessous est de la mousse ou du yaourt et le composant qui se trouve au-dessus est une gelée ou du chocolat.

7. Appareil pour la mise en oeuvre du procédé suivant l'une des revendications 1 à 6, constitué d'un poste (1) de chargement du premier composant, d'un poste (8) de chargement du second composant et d'un dispositif doseur (4) situé entre les deux postes de chargement pour le dosage de neige carbonique, caractérisé en ce que le dispositif doseur (4) est constitué d'au moins une buse (3) se trouvant à l'extrémité supérieure d'un corps creux ouvert à la partie inférieure et en ce qu'il présente en outre un dispositif (5) d'enlèvement par succion de la neige carbonique en amont du dosage du second composant.

8. Appareil suivant la revendication 7, caractérisé en ce qu'il fonctionne en cadence.

9. Appareil suivant la revendication 7 ou 8, caractérisé en ce la buse (3) se trouve à une distance de 20 à 80 cm de la surface du premier composant (15).

10. Appareil suivant l'une des revendications 7 à 9, caractérisé en ce que le dispositif (5) d'enlèvement par succion est constitué d'un corps ceux cylindrique qui présente au voisinage de la surface du premier composant au moins deux buses servant à faire arriver de l'air comprimé (6).
